# FASCICULE DE BREVET EUROPEEN

(11) **EP 1 163 471 B1**
(45) Date de publication et mention de la délivrance du brevet: **10.09.2008**
(21) Numéro de dépôt: 01903862.9
(22) Date de dépôt: 03.01.2001
(51) Int. Cl.: F21S 4/00

(54) **PLINTHE LUMINEUSE**
BELEUCHTETE FUSSLEISTE
LIGHTING STRIP

(30) Priorité: 05.01.2000 FR 0000091
(43) Date de publication de la demande: 19.12.2001
(73) Titulaire: S.A. L.D., 14990 Bernières-sur-Mer (FR)
(72) Inventeur: LEDE, Denis, F-14990 Bernières-sur-Mer (FR)
(74) Mandataire: Bloch, Gérard
(86) Numéro de dépôt international: PCT/FR2001/000017
(87) Numéro de publication internationale: WO 2001/050062

(56) Documents cités:
- EP-A- 0 389 382
- EP-A- 0 669 492
- DE-U- 8 531 194
- FR-A- 2 623 223
- US-A- 3 408 250
- US-A- 4 855 882
- US-A- 4 884 178

## Description

La présente invention appartient au domaine de l'éclairage intérieur à objectif sécurisant et à caractère décoratif. US-4884178 décrit une corniche.

Dans les musées ethnographiques où l'on doit maintenir une certaine pénombre et un degré hygrométrique constant pour la préservation des antiquités ; dans les couloirs et les chambres d'hôpitaux la nuit ; dans les hôtels comme dans les résidences privées vers les salles de bains ou toilettes ; dans les salles de spectacle et notamment les salles de cinéma ; dans les cafés, bars, restaurants, sur les comptoirs, dans les mains courantes ; dans les usines et les entrepôts surveillés, on utilise divers moyens lumineux pour assurer en toute sécurité dans une obscurité totale ou relative le balisage des circulations.

Au fil des années, des moyens tout d'abord rudimentaires se sont sophistiqués et diversifiés toujours davantage : nez de marches, plinthes, corniches, chenilles lumineuses, remplaçant peu à peu boîtes encastrées, hublots et autres arrangements.

Le but de la présente invention est un profilé réalisé industriellement, découpé à la demande, dont la jupe est de préférence colorée dans la masse au moyen d'une des trois couleurs fondamentales rouge, vert bleu, ces couleurs améliorant la réflexion des pinceaux lumineux et permettant de combiner à la fois la fiabilité, l'utilité, le rendement économique et une esthétique s'intégrant parfaitement à l'environnement.

A cet effet, l'invention a pour objet une plinthe électrifiée découpable en longueur et ajustable en hauteur par auto-cassage réalisée en matériau divers caractérisée en ce qu'elle comporte :
- une jupe et en équerre une jupette colorée dans la masse ou un redent en oblique
- au dos de la jupe un rainurage facilitant son collage sur le pied d'un mur ou d'une cloison,
- une gorge en U dans laquelle viennent s'immobiliser un support de lumière et un capot diffuseur,
- deux butoirs permettant de stabiliser un circuit imprimé et l'orientation parfaite d'ampoules régulièrement espacées projetant des cônes lumineux identiques sur jupe et jupette.

Des nuances de couleur différentes peuvent être obtenues par mélange de composantes fondamentales.

Ce profilé peut-être réalisé en un matériau usuel dans le BTP, soit en P.V.C., Aluminium ou autre métal, en bois, en fibre de carbone, etc ...

L'invention sera mieux comprise par référence aux dessins attachés à la présente demande illustrant des réalisations de plinthe selon l'invention réalisées en plastique extrudé.
La figure 1 est une élévation du profilé de la dite plinthe vu en coupe.
La figure 2 est une vue en coupe du support de lumière intégré dans le profilé.
La figure 3 est une vue en perspective d'une première réalisation préférée avec la représentation des pinceaux de lumière en forme de cônes lumineux espacés régulièrement.
La figure 4 est une vue en perspective d'une deuxième réalisation préférée avec la représentation de l'effet de réflexion lumineuse non plus sur une jupette horizontale placée en bas de plinthe perpendiculairement à sa jupe verticale mais en oblique immédiatement sous la source lumineuse.

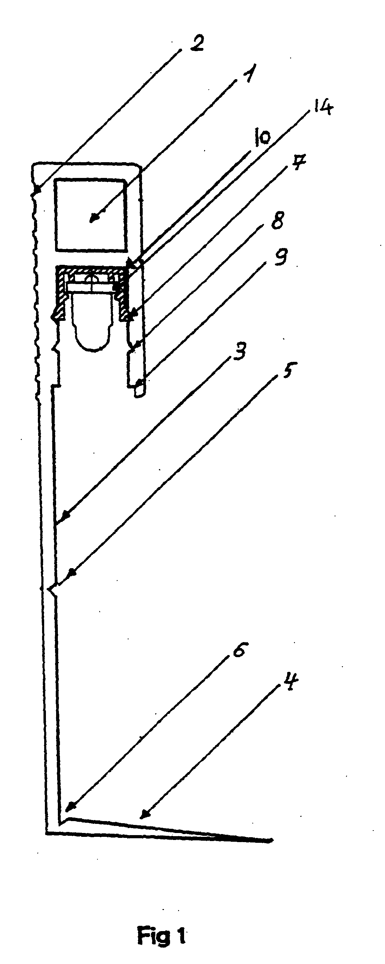

Dans la figure 1, une partie haute (1) permet la fixation par vis du profilé préalablement découpé à la longueur désirée.

Le dos du profilé a été extrudé avec un rainurage (2) permettant par collage une meilleure adhérence de la plinthe au pied de mur ou de cloison lui servant d'appui.

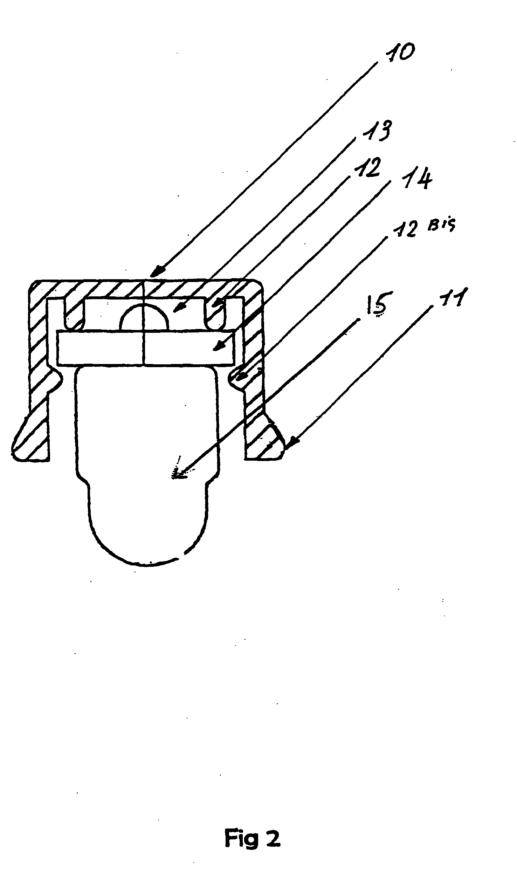

La plinthe est constituée en outre :
- d'une jupe verticale (3) et d'une jupette horizontale (4) toutes deux colorées dans la masse et servant de réflecteurs. Dans la jupe verticale (3) sont ménagés des angles auto-cassants permettant de réduire la hauteur de la plinthe avec retour du réflecteur à l'horizontale (5) et dans ce cas la suppression de la jupette horizontale (4) par autre cassage de l'angle (6).
- d'une gorge en U dans laquelle le support de lumière (10) illustré sur la figure 2 est inséré et immobilisé dans des angles (7), un deuxième angle (8) étant ménagé plus bas pour fixer un capot diffuseur de couleur.
- d'un profilé servant de support de lumière (10) tel qu'illustré figure 2 venant par son renflement (11) épouser la gorge en U dans l'angle (7) et doté de deux butoirs (12) (12bis) dans l'espace de service ménagé (13) permettant la stabilité du circuit imprimé (14) et l'orientation parfaite d'ampoules (15) régulièrement espacées.
- d'un capot diffuseur de couleur non représenté venant se glisser dans l'angle (8).

Dans la première réalisation préférée, la plinthe est d'une hauteur de 135 mm et d'une épaisseur de 16,5 mm.

La partie haute du profilé y compris la gorge où est inséré le support de lumière (10) est longue de 36 mm. La jupe et la jupette sont colorées en rouge, bleu, vert ou jaune. La jupette a 37,5 mm de longueur. La distance entre l'angle (5) et l'angle (6) est également de 37,5 mm.

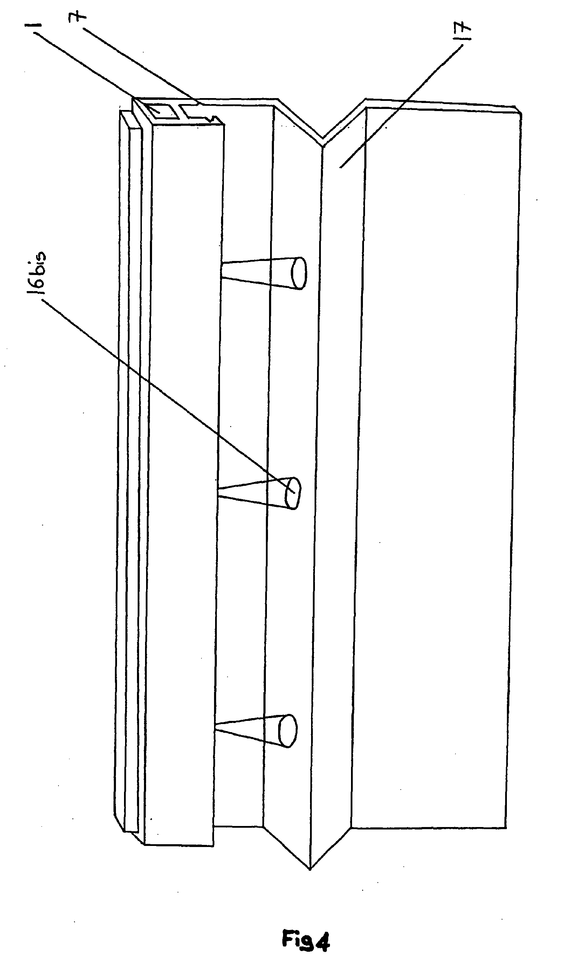

Dans la deuxième réalisation préférée représentée dans la figure 4, la jupette (4) en retour perpendiculaire de la jupe (3) est supprimée ainsi que les angles (5 et 6).

Un redent oblique (17) de la jupe (3) est ménagé immédiatement sous la rampe lumineuse comme figuré.

A l'effet de cônes lumineux est substitué un effet pointilliste espacé et régulier offrant une variante de balisage plus discrète lorsque la pénombre ambiante doit être préservée en permanence comme par exemple dans les salles de cinéma.

Le circuit imprimé (14) est du modèle objet du dépôt international DM/035412 du 1^{er} février 1996 avec diodes électroluminescentes (LED).

Ces circuits sont généralement manufacturés en éléments de 1 mètre de longueur ; on peut les couper à la mesure entre les lampes et leur résistance antichute de potentiel. Ils sont posés en parallèle.

Les ampoules (15) sont des ampoules du commerce colorées de 100 à 1250 millicandelas.

On a assuré la stabilité du circuit et l'orientation parfaite des ampoules comme décrit plus haut.

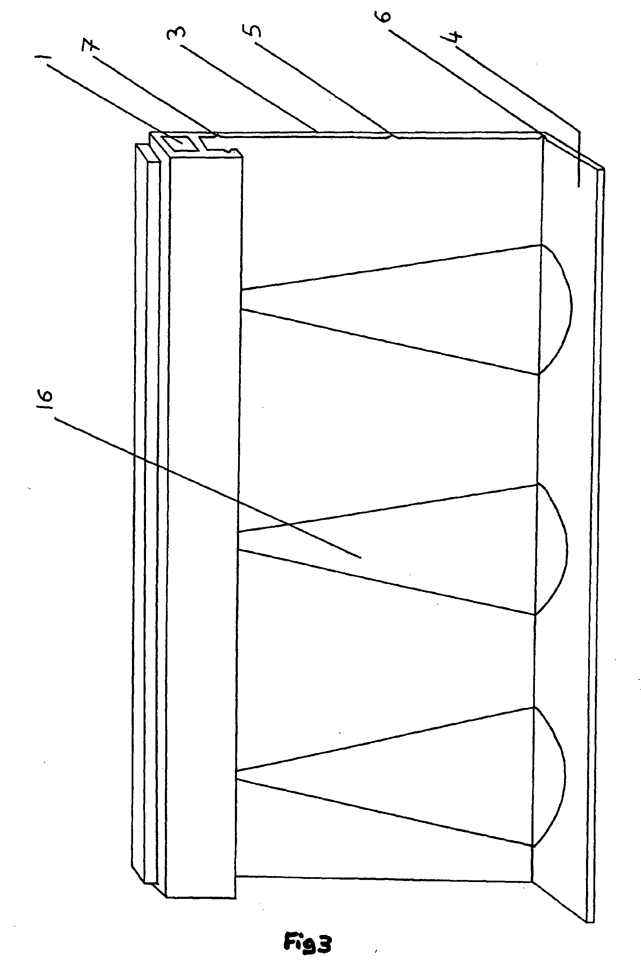

Cette orientation permet la projection de pinceaux de lumière au travers du capot diffuseur sous forme de cônes lumineux (16) représentés figure 3, ou de points luminescents (16bis) représentés figure 4, la coloration de la jupe et de la jupette augmentant la réflexion de la lumière ainsi projetée.

La jupe et la jupette sont colorées dans la masse à l'aide de préférence de l'une des trois couleurs fondamentales le rouge, le bleu ou le vert ou encore un mélange de deux de celles-ci tel que à titre d'exemple le jaune.

Le fonctionnement est assuré par alimentation électrique en provenance du secteur de distribution local, le voltage primaire étant converti moyennant un transformateur, un pont de diodes et un condensateur de filtrage en tension de sortie 18 V.

Une alimentation de sauvegarde par batteries 18 V est prévue en cas de panne ou d'absence de secteur d'alimentation.

Dans les deux cas, la mise sous tension est assurée par interrupteur télécommandé ou non et l'utilisation d'un chargeur tampon ou stabilisateur du type « floating » permet d'entretenir au mieux l'état de charge des batteries afin d'en prolonger au maximum la durée de vie.

Le raccordement des plinthes est assuré par un câblage classique appelé primaire lorsque l'alimentation provient du secteur doublé d'un câblage secondaire 18 V parallèle lorsque l'alimentation provient des batteries.

## Revendications

1. Plinthe électrifiée découpable en longueur et ajustable en hauteur par auto-cassage réalisée en matériau divers **caractérisée en ce qu'**elle comporte :
- une jupe (3) avec sur un côté une jupette en équerre (4) colorée dans la masse ou un redent en oblique (17),
- un rainurage (2), au dos de la jupe (3), facilitant le collage de la plinthe sur le pied d'un mur ou d'une cloison,
- une gorge en U lumineuse, sur l'autre côté de la jupe (3), dans laquelle sont immobilisés un profilé formant un support de lumière (10) et un capot diffuseur,
- le profilé comportant un circuit imprimé et des ampoules régulièrement espacées, stabilisées par deux butoirs (8), projetant des cônes lumineux identiques sur jupe et jupette ou redent.

2. Plinthe électrifiée selon la revendication 1, avec une jupette en équerre, **caractérisée en ce que** la jupe (3) est colorée dans la masse et comporte des angles auto-cassants (5) permettant de réduire la hauteur de la jupe (3).

3. Plinthe électrifiée selon la revendication 1 **caractérisée en ce que** la jupette en équerre (4) par rapport à la jupe (3) comporte un autre angle auto-cassant (6).

4. Plinthe électrifiée selon la revendication 1 **caractérisée en ce que** la jupe (3) et la jupette (4) sont teintées dans la masse au moyen de l'une des trois couleurs fondamentales rouge, bleu, vert ou un mélange de celles-ci.

5. Plinthe selon les revendications 1 et 4 alimentée électriquement par courant de secteur public ou par batteries.

## Claims

1. Electrified plinth which may be uncoupled lengthwise and which can be adjusted in height by self-breaking, made from various materials, **characterised in that** it comprises:
- side sheeting (3), with on one side, a small sheeting (4) at right angles in the same colour as the mass, or an oblique step (17),
- grooving (2), on the back of the side sheeting (3), facilitating gluing the plinth on the foot of a wall or a partition,
- a U-shaped luminous groove, on the other side of the side sheeting (3) in which a section forming a light support (10) and a diffuser cover are immobilised,
- section which comprises a printed circuit and regularly spaced bulbs, stabilised by two stoppers (8), and from which protrudes identical luminous cones on the side sheeting, the small sheeting or the step.

2. Electrified plinth according to claim 1, with a small sheeting at right angles, **characterised in that** the side sheeting (3) has the same colour as the mass and comprises self-breaking angles (5) allowing the height of the side sheeting (3) to be reduced.

3. Electrified plinth according to claim 1 **characterised in that** the small sheeting at right angles (4) in relation to the side sheeting (3) comprises another self-breaking angle (6).

4. Electrified plinth according to claim 1 **characterised in that** the side sheeting (3) and the small sheeting (4) are coloured the same as the mass using one of the basic colours red, blue or green or a mixture of these.

5. Plinth according to claim 1 and 4 supplied electrically by a current from the public sector or by using batteries.

## Patentansprüche

1. Elekrifizierte Fußleiste, die ablängbar und durch Sollbruch in der Höhe einstellbar sowie aus diversem Material hergestellt ist, **dadurch gekennzeichnet, dass** sie aufweist:
- Eine Schürze (3) mit einer auf einer Seite angeordneter, abgewinkelter kleiner Schürze (4), koloriert in der Masse, oder mit einem geneigten Vorsprung (17),
- eine auf der Rückseite der Schürze (3) angeordnete Riffelung (2), die das Verkleben der Fußleiste am Fuße einer Mauer oder einer Zwischenwand erleichtert,
- eine auf der anderen Seite der Schürze (3) angeordnete Leuchtauskehlung, in der ein einen Leuchtträger (10) bildender Profilstab und eine Streukappe angeordnet sind,
- wobei der Profilstab eine gedruckte Schaltung und gleichmäßig beabstandete Lampen trägt, welche von zwei Anschlägen (8) stabilisiert werden und identische Leuchtkegel auf die Schürze und die kleine Schürze oder auf den Vorsprung aussenden.

2. Elektrifizierte Fußleiste nach Anspruch 1 mit einer abgewinkelten, kleinen Schürze, **dadurch gekennzeichnet, dass** die Schürze (3) in der Masse colloriert ist und Sollbruch-Winkelkerben (5) aufweist, die eine Reduzierung der Höhe der Schürze (3) gestatten.

3. Elektrifizierte Fußleiste nach Anspruch 1, **dadurch gekennzeichnet, dass** die gegenüber der Schürze (3) abgewinkelte kleine Schürze (4) eine weitere Sollbruch-Winkelkerbe (6) aufweist.

4. Elektrifizierte Fußleiste nach Anspruch 1, **dadurch gekennzeichnet, dass** die Schürze (3) und die kleine Schürze (4) in der Masse eingefärbt sind mit einer der drei Grundfarben Rot, Blau, Grün oder mit einer Mischung aus diesen.

5. Fußleiste nach einem der Ansprüche 1 bis 4, elektrisch versorgt mit Strom aus dem öffentlichen Netz oder mit Batterien.
